(19) Europäisches Patentamt
European Patent Office
Office européen des brevets

(11) EP 0 573 903 B1

(12) **EUROPÄISCHE PATENTSCHRIFT**

(45) Veröffentlichungstag und Bekanntmachung des Hinweises auf die Patenterteilung:
**14.08.1996 Patentblatt 1996/33**

(51) Int Cl.⁶: **G05B 19/418**

(21) Anmeldenummer: **93108968.4**

(22) Anmeldetag: **04.06.1993**

(54) **Transporteinrichtung**

Transport device

Dispositif de transport

(84) Benannte Vertragsstaaten:
**DE ES FR GB IT SE**

(30) Priorität: **06.06.1992 DE 4218818**

(43) Veröffentlichungstag der Anmeldung:
**15.12.1993 Patentblatt 1993/50**

(73) Patentinhaber: **Maschinenfabrik Müller-Weingarten AG
D-88250 Weingarten (DE)**

(72) Erfinder:
• **Renn, Werner
D-7981 Berg (DE)**

• **Wagner, Wilhelm
D-7987 Weingarten (DE)**

(74) Vertreter: **Patentanwälte Eisele, Otten & Roth
Seestrasse 42
88214 Ravensburg (DE)**

(56) Entgegenhaltungen:
EP-A- 0 071 352          WO-A-90/08352
DE-A- 3 416 227          DE-A- 3 913 663
DE-A- 4 121 841

## Beschreibung

Die Erfindung betrifft eine Transporteinrichtung zum Transportieren insbesondere großflächiger Teile in einer Umformmaschine und insbesondere in einer Großteil-Stufenpresse.

Aus der DE 38 43 975 C1 ist eine Transporteinrichtung zum Transportieren von großflächigen Teilen in einer Stufenpresse bekannt geworden. Bei derartigen Transporteinrichtungen sind zwei, eine Horizontal- und eine Vertikalbewegung ausführende, sich über die gesamte Länge der Presse erstreckende Tragschienen vorgesehen, an denen mit Saugern oder Magneten bestückte Quertraversen im Stufenabstand der auf Schiebetischen angeordneten Werkzeuge befestigt sind. In den Zwischenräumen zwischen den Bearbeitungsstationen befinden sich sogenannte Leerstufen oder Orientierungsstationen, in welchen die Werkstücke auf Zwischenablage während des Beförderungstaktes abgelegt werden. Dabei werden die Werkstücke in den Leerstufen auf speziell vorbereitete Absteckbolzen oder Schablonen abgelegt, die der Werkstückkontur angepaßt sind und an deren Lage sich die das Werkstück zur nächsten Bearbeitungsstufe abholende Quertraverse anpassen muß.

Zur Bewegung der Werkstücke sind demnach Transporteinrichtungen (Umsetzeinrichtungen) in der Presse vorgesehen. Das Werkstück wird z. B. von einem Einlegegerät (Feeder) in die erste Bearbeitungsstufe eingelegt und dann durch die Transporteinrichtung im Arbeitstakt der Presse durch diese bis in den Bereich der Entnahme transportiert. Dabei erfolgt die Umformung der Werkstücke über die stößelbewegten Werkzeuge innerhalb der Bearbeitungsstufen. Die Umsetzeinrichtung bewegt das Werkstück in zwei oder drei Freiheitsgraden durch die Presse, wobei als Freiheitsgrade beispielsweise das Heben/Senken und das Transportieren/Zurückführen zu verstehen ist.

Zur Durchführung dieser Bewegungen weisen die Umsetzeinrichtungen drehgetriebene Kurvengetriebe auf, deren verschiedene Kurvenscheiben mit Schwenkhebel und Schubstangenanordnungen zusammenwirken. Eine derartige Steuerungsanordnung ist beispielsweise in der DE 39 13 663 A1 oder in der EP 0 210 745 gezeigt. Die Steuerung der Bewegungen sowohl der Tragschienen als auch der Quertraversen innerhalb der Presse muß völlig zuverlässig mit der Umformbewegung der Presse synchronisiert sein. Dies erfolgt bei mechanischen Pressen durch eine unmittelbare mechanische Zwangskopplung zwischen der Umformbewegung der Presse und der Transportbewegung der Teile, wobei bei der Umsetzeinrichtung die mechanische Zwangskopplung über Kurvenscheiben mit Schubstangenanordnungen geschieht. Die mechanische Zwangskopplung zwischen Umformbewegung und Transportbewegung ist bei Transferpressen oder Großteil-Stufenpressen deshalb so immens wichtig, da derartige Pressen in gewissem Umfang sich ständig ändernden Betriebsbedingungen unterworfen sind. Aufgrund der vielfältigen Einflüsse entwickeln derartige Pressen ein gewisses "Eigenleben", d.h. die Umformbewegungen sind nicht hundertprozentig exakt vorhersehbar, so daß Schwankungen im System ausgeglichen werden müssen. Dies geschieht bei bekannten Transferpressen durch eine unmittelbare mechanische Zwangskopplung aller Bewegungen innerhalb der Presse. Als ergänzende Literatur wird auf die DE 38 32 499 mit einer entsprechenden mechanischen Pressensteuerung verwiesen.

Aus der DE 37 03 920 A1 ist ein Transfersystem bekannt geworden, bei welchem zwei Greiferschienen für die Arbeitsmaschine in zwei oder drei senkrecht zueinander ausgerichteten Richtungen durch -voneinander unabhängigen-Linear- oder Drehantriebe bewegbar sind. Hierdurch entfällt eine mechanische Zwangskoppelung zwischen der Umformbewegung, d.h. der Auf- und Abwärtsbewegung des Pressenstößels und der Transportbewegung des Werkstücks. Bei diesem Transfersystem sollen Änderungen an den Hubwegen der Greiferschienen und deren Lage relativ zum oberen Umlenkpunkt der Antriebsmaschine ohne den sonst üblichen großen Aufwand mittels Wechsel von Kurvenscheiben vorgenommen werden. Demzufolge arbeitet die Steuerelektronik für die separaten Antriebe mit einem mit der Arbeitsmaschine gekoppelten Taktgeber zusammen. Dabei ist der Taktgeber als Winkelcodierer ausgebildet, um einen zuverlässigen Synchronlauf der einzelnen Bewegungsabläufe zum Takt der Arbeitsmaschine zu gewährleisten. Bei einem solchen System findet demnach eine Abstimmung des Bewegungsablaufes zwischen Umformbewegung und Transportbewegung statt. Eine derartige Steuerung berücksichtigt jedoch nicht in ausreichendem Maße die Eigendynamik oder das Eigenverhalten der Presse im Rahmen seiner Umformbewegung.

Aus der Druckschrift EP-A-0 071 352 ist ein Steuerungssystem für eine Pressenstraße bekannt geworden, bei welcher anstelle der zuvor beschriebenen unmittelbaren mechanischen Zwangskopplung zwischen den einzelnen Bewegungsabläufen in der Pressenstraße eine Zwangskopplung mittels elektronischen Mitteln zwischen dem mechanischen Bewegungsablauf mindestens zweier Bewegungsteilsysteme erfolgt. Insbesondere ist eine elektronische Zwangskopplung zwischen Pressen bekannt geworden, deren Takt von einer der Pressen stammt. Die bekannte Einrichtung hat jedoch den Nachteil, daß keine Steuerung nach beliebigen mathematisch definierbaren Bewegungsgesetzen ermöglicht wird.

Der Erfindung liegt die Aufgabe zugrunde, ein völlig neuartiges Regelungskonzept für Pressen zu schaffen, bei welcher die mechanische Kopplung zwischen Umformbewegung und Werkstücktransportbewegung aufgehoben wird und trotzdem eine vollständige Synchronisation innerhalb eines vorgegebenen Toleranzbereiches erreicht wird. Die Rückkopplung zwischen Umformbewegung und Werkstücktransportbewegung ist in jeder Bearbeitungsphase zu gewährleistet und jede Änderung des Betriebsverhaltens der Presse ist sofort zu erkennen und von allen Funktionsgruppen zu verarbeiten.

Diese Aufgabe wird ausgehend von einer Transporteinrichtung der einleitend bezeichneten Art erfindungsgemäß durch die Merkmale des Anspruchs 1 gelöst.

Weitere vorteilhafte und zweckmäßige Ausgestaltungen der Erfindungen sind in den Unteransprüchen angegeben.

Der erfindungsgemäßen Transporteinrichtung liegt der Kerngedanke zugrunde, daß eine Zwangskopplung und Synchronisation mit elektronischen Mitteln zwischen zwei oder mehreren mechanisch nicht verbundenen Teilsystemen derart erfolgt, daß die Bewegungsachsen der das Werkstück transportierenden Teilsysteme (Slave-Systeme) nach einem speziellen mathematisch beschreibbaren oder beliebig manuell vorgebbaren oder empirischen Bewegungsgesetz gesteuert werden, wobei diese Bewegungen einer vorgegebenen Bewegung des Teilsystems der Umformbewegung als Mastersystem innerhalb eines vorgegebenen Toleranzfensters folgen.

Die vorliegende Erfindung unterscheidet sich von den herkömmlich bekannten Steuerungen dadurch, daß die bisher auf rein mechanischem Wege durchgeführte Zwangskopplung zwischen der Umformbewegung der Presse und der Transportbewegung der Teile nunmehr mittels elektronischen Mitteln durchgeführt wird. Erst hierdurch ist die bei einer Großteil-Stufenpressen ständig auftretende Eigendynamik vollständig erfaßbar, so daß sich jegliche Änderungen beim Umformvorgang ähnlich wie bei der früheren Kurvensteuerung unmittelbar auf den Teiletransport in den einzelnen Stufen auswirkt. Entgegen dem starren bisherigen Steuerkurvensystem können nun beliebige Bewegungsformen und Geschwindigkeiten realisiert werden.

Der Erfindung wird nachfolgend anhand der einzelnen Figuren und insbesondere am Beispiel der Steuerung bzw. Regelung von Orientierungsstationen, d.h. Leerstufen näher erläutert.

Es zeigen

Fig. 1 eine Seitenansicht einer einzelnen Bearbeitungsstufe einer Großteil-Stufenpresse mit beidseitig angeordneten Leerstufen bzw. Orientierungsstationen,

Fig. 1a, 1b mögliche Teilemanipulationen durch Schwenken der Teileauflage in einer Orientierungsstation,

Fig. 2a eine schematische Darstellung des Steuerungsablaufes zwischen der Bewegung der Umformmaschine (Master) und der hieran zwangsgekoppelten Bewegung der Transferachsen (Slave),

Fig. 2b eine entsprechende Darstellung der Hardwarestruktur nach Fig. 2a, bezogen auf die Orientierstationen;

Fig. 3, 3a eine schematische graphische Darstellung der verschiedenen Bewegungssysteme als Teilsysteme und deren Zusammenwirken mittels elektronischer Kopplung und

Fig. 4 eine prinzipielle Darstellung der funktionalen Struktur des Regelkreises für eine Teilbewegung.

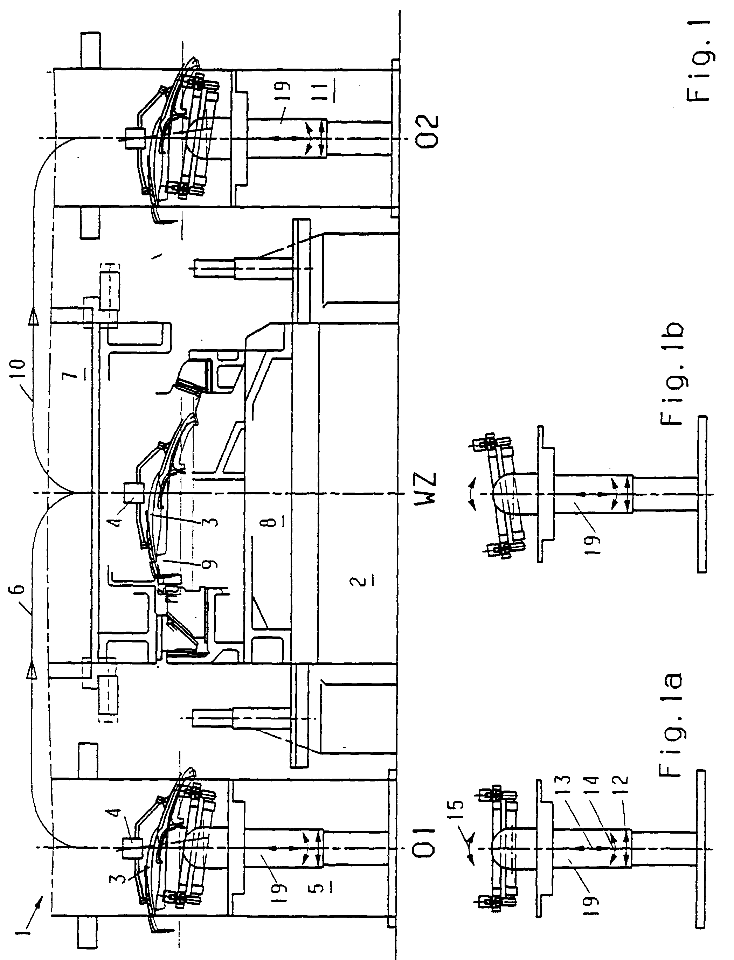

Bezüglich des prinzipiellen Aufbaus einer Transporteinrichtung in einer Großteil-Stufenpresse wird auf die eingangs erwähnte DE 38 43 975 C1 verwiesen. In der Fig. 1 ist hierfür ein Teilausschnitt einer Großteil-Stufenpresse 1 gezeigt, mit einer Bearbeitungsstation 2, in welchem ein Werkstück 3 durch Umformung bearbeitet wird. Hierzu wird das Werkstück 3 mittels Quertraversen 4 von einer Leerstufe oder Orientierungsstation 5 über die Auf- und Abbewegung sowie die Längsbewegung nicht näher dargestellter Tragschienen längs der Verfahrkurve 6 in die Bearbeitungsstation 2 eingelegt. Die Quertraverse 4 fährt dann aus dem Bearbeitungsbereich in eine Parkstellung heraus, um den eigentlichen Bearbeitungsvorgang, d.h. den Umformvorgang des Werkstücks nicht zu behindern. Der Umformvorgang geschieht durch Absenken eines nur schematisch dargestellten Pressenstößels 7 mit daran befestigtem Oberwerkzeug, welches auf das auf dem Pressentisch 8 aufgesetzte Unterwerkzeug 9 aufläuft.

Nach erfolgter Bearbeitung läuft der Pressenstößel nach oben und gibt das zwischen Oberwerkzeug und Unterwerkzeug verformte Werkstück wieder frei. Gleichzeitig läuft die Quertraverse 4' in die Bearbeitungsstation zur Aufnahme des Werkstücks, um dieses über die Fahrkurve 10 in die nachfolgende Leerstufe bzw. Orientierungsstation 11 zu verfahren. In dieser Orientierungsstation muß das umgeformte Werkstück in seiner Lage den neuen Gegebenheiten angepaßt werden.

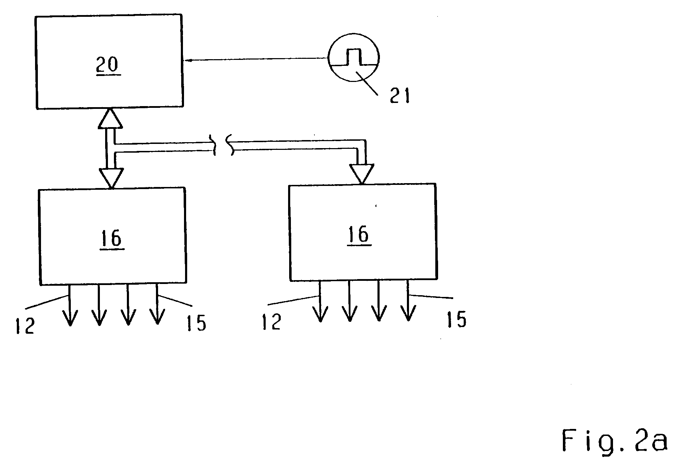

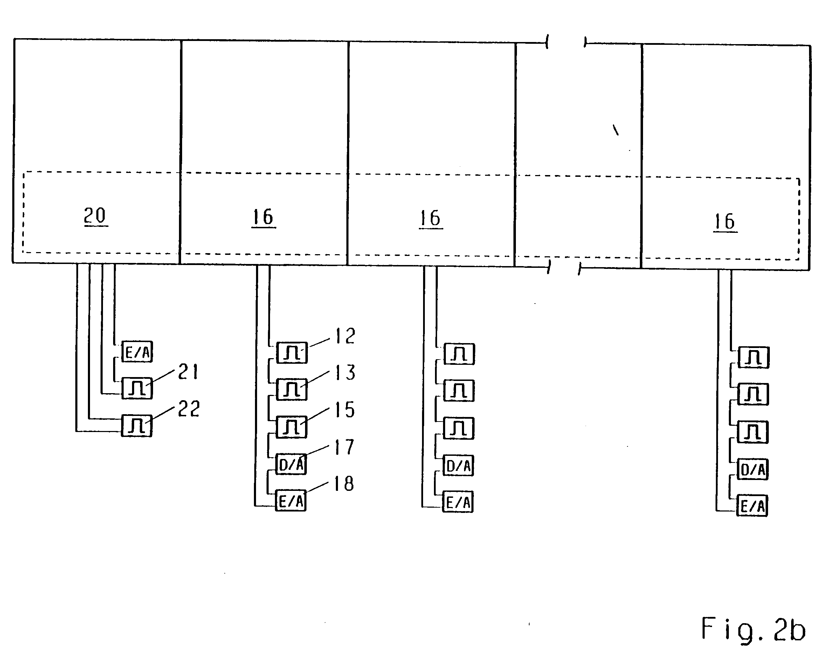

Erfindungsgemäß sollen nun beliebig viele Bewegungen des Teiletransports anstelle durch einen mechanischen durch jeweils elektrische Antriebe erfolgen, wobei dennoch eine Zwangskopplung bzw. Synchronisation zwischen der mechanischen Umformbewegung bzw. Pressenbewegung der Presse und der Bewegung beim Teiletransport erfolgen soll. Bei dem in Fig. 1 dargestellten Beispiel soll dies beispielsweise bei einer Steuerung für den Bewegungsablauf einer Bewegungseinrichtung 19 in den beiden Orientierungsstationen 5, 11 erfolgen. Die Orientierungsstationen 5, 11 dienen dabei zur Teilemanipulation durch Schwenken oder Verschieben der Teileauflage in die gewünschte Lage. In der Fig. 1 soll das Werkstück 3 in der Orientierungsstation 5 beispielsweise in der angegebenen schrägen Position zu liegen kommen. Demgegenüber kann das Werkstück in der Orientierungsstation auch Lagen einnehmen, wie dies in der Fig. 1a oder 1b, d.h. in horizontaler oder in die andere Richtung gekippte Lage gezeigt ist. Hierfür weist jede Orientierungsstation 5, 11 einen eigenen Mikrorechner bzw. Achsprozessor auf, der für die Ansteuerung von 3 bzw. 4 NC-Achsen ausgelegt ist, die in Fig. la mit den Bezugszeichen 12 bis 15 schematisch dargestellt sind. Jede Orientierungsstation kann demnach eine horizontale 12, vertikale 13, eine Drehbewegung 14 sowie eine Schwenkbewegung 15 ausführen, wobei diese Bewegungen durch einen zugehörigen Achsprozessor 16 in jeder Orientierungsstation gesteuert werden. In den Fig. 2a, 2b sind die Achsprozessoren 16 als Achsprozessoren 1 bis N mit der Bezeichnung "Slave" dargestellt. Jeder Achsprozessor kann die angegebenen Führungsgrößen zur Ansteuerung von bis zu vier NC-Achsen 12 bis 15 generieren. In der Fig. 2b steuert jeder Achsprozessor 3 Bewegungsachsen, nämlich 12 (Schritt), 13 (Hub) und 15 (Schwenken) an. Mit Bezugszeichen 17 ist ein zusätzliches Analogausgabemodul, mit Bezugszeichen 18 ein digital Ein-/Ausgabemodul zur Steuerung vorgesehen.

Die Bewegung der Bewegungsachsen der Bewegungseinrichtung 19 in den Orientierungsstationen 5, 11 erfolgt nicht nur nach einer üblichen NC-Steuerung, sondern, wie in Fig. 2a, 2b dargestellt, in Verbindung mit einer elektronischen Zwangskopplung zur übrigen Bewegung und insbesondere zur Umformbewegung, d.h. zur Bewegung des Pressenstößels der Großteil-Stufenpresse.

Bei bekannten Großteil-Stufenpressen wird die Bewegung der Pressenstößel der einzelnen Stufen über eine zentrale Welle auf die Umsetzeinrichtung der Presse übertragen, die eine Leitwelle beinhaltet, auf welcher sich üblicherweise die Kurvenscheiben zur Steuerung der Teilebewegung befinden. Erfindungsgemäß wird nun diese, bei bekannten Maschinen vorhandene Leitwelle als Referenzmittel verwendet, um eine Koordination bzw. Synchronisation zwischen der Bewegung des Pressenstößels bzw. des Umformvorgangs und der Teilebewegung vorzusehen.

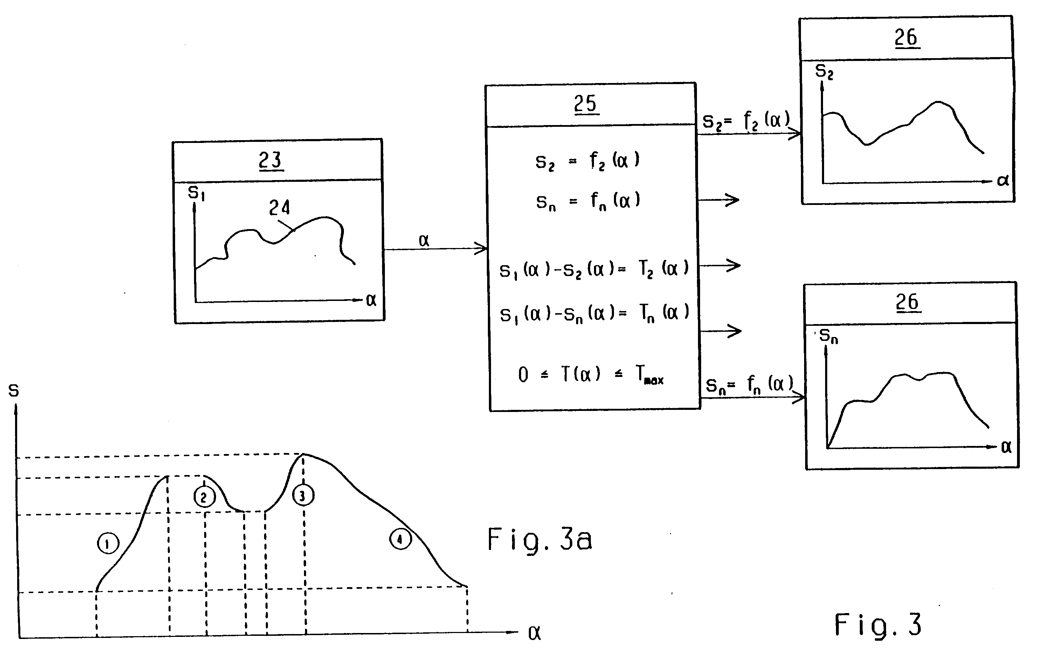

Gemäß der Darstellung der Erfindung in Fig. 2a, 2b ist hierfür ein sogenannter Leitwellenprozessor 20 vorgesehen, der eine Masterfunktion gegenüber den Achsprozessoren 16 als Slave-Funktion ausübt. Dabei wird gemäß der Darstellung des Funktionsablaufes in Fig. 3 der Ist-Wert des Leitwellendrehwinkels $\alpha$ über einen oder zwei Positionsgeber 21, 22 erfaßt. Dabei wird die Umformbewegung der Presse, d.h. die Bewegung des Pressenstößels als Bewegung des Teilsystems $S_1$ bezeichnet. S1 erfaßt Drehbewegung der Leitwelle (=Winkelcodierer) entsprechend der Lösung bei der DE 37 039 20. Es können jedoch auch beliebige Ausgangsgrößen (z.B. erzeugt durch Kurven) verarbeitet werden. In der Fig. 3 ist die mittels des Positionsgebers 21 erfaßte Bewegung des Teilsystems 1 im Master-Diagramm 23 dargestellt, wobei die Bewegung $S_1 = f(\alpha)$ ist. Die im Diagramm 23 gezeigte Kurve 24 erfaßt deshalb jeden Ist-Wert des Leitwellenwinkels $\alpha$ in Abhängigkeit der Bewegungsachse dieses Teilsystems.

Der Leitwellenprozessor 20 (Master) muß deshalb folgende Schritte vornehmen:

Erfassung des Ist-Wertes des Leitwellenwinkels $\alpha$;
Übertragung dieses Ist-Wertes des Leitwellenwinkels $\alpha$ an alle vorhandenen Achsprozessoren 16, d. h. an die Slave-Einrichtungen 1 bis N;
Die Bewegungen der Achsprozessoren 16 erfolgen demnach streng synchron zur Leitwelle, d.h. es besteht eine Zwangskopplung zwischen Pressenbewegung und Transfer. Hieraus folgt, daß auch beim Anhalten und beim Neustart einer Bewegung ein vorgegebenes Positionstoleranzband nicht verlassen wird und auch jederzeit automatisch eine Anpassung an die nicht konstante Geschwindigkeit der Presse bedingt durch die Drehzahländerung des Schwungrades z. B. bei Energieentnahme stattfindet.

Der Mikrorechner für die Master-Funktion übernimmt weiterhin die Aufgabe der Übertragung des Fehlerstatusfeldes für jede Bewegungseinrichtung, d.h. z. B. für jede einzelne Orientierungsstation 5, 11.

Der Mikrorechner bzw. Leitwellenprozessors 20 für die Master-Funktion übernimmt darüberhinaus die Übertragung der Werkzeug- und Maschinendaten an die einzelnen Achsprozessoren 16, d.h. er führt ein Download der Ablaufprogramme für alle Orientierungsstationen durch.

Wie aus dem Prinzipdiagramm nach Fig. 3 weiterhin ersichtlich, werden die Bewegungen der einzelnen Achsen jedes Achsprozessors 16 nach einem beliebigen, mathematisch definierbaren Bewegungsgesetz bestimmt wobei die Einhaltung eines vorgegebenen Positionstoleranzbandes gewährleistet ist. Aus dem Leitwellenprozessor ergibt sich abhängig von der jeweiligen Leitwellenlage demnach eine Bewegungsfunktion für die einzelnen Bewegungseinrichtungen 19 $S_2 = f_2(\alpha)$ bis $S_n = f_n(\alpha)$. Die elektronische Kopplung ist im Diagramm 23, 25 von Fig. 3 schematisch dargestellt.

Aus den in Fig. 3 dargestellten Diagrammen 26 ist die jeweilige Bewegung der Bewegungseinrichtungen 19, d.h. der Teilsysteme $S_2$ bis $S_n$ erkennbar, wobei $S_2 = f_2(\alpha)$ bis $S_n = f_n(\alpha)$ für das n-te Teilsystem ist. Die Bewegungen der einzelnen Bewegungsachsen jedes Achsprozessors erfolgt demnach nach einem speziellen Weggesetz. Der Start- und Endpunkt der jeweiligen Bewegung kann im Teach-in-Verfahren für jede Achse separat festgelegt werden. Dabei kann sich ein kompletter Zyklus beispielsweise aus max. vier Teilbewegungen zusammensetzen, wie dies in Fig. 3a dargestellt ist, wobei jede Teilbewegung 1 bis 4 das ganze Weggesetz durchläuft. Zu beachten ist, daß der Positionsendpunkt der letzten Teilbewegung gleich ist, mit dem Positionsstartpunkt der ersten Teilbewegung.

Da die Software speziell für die Besonderheit eines Pressenbetriebes entwickelt ist erfolgen die Bewegungen streng synchron zur Leitwelle (Zwangskopplung zum Transfer). Die in Fig. 3a dargestellten Teilbewegungen 2 und 3 können beispielsweise nur optional vorgesehen sein, d.h. sie müssen nicht unbedingt für jedes Teil geteacht werden. Sie sind z. B. dann nötig, wenn kollisionsbedingte Abtauchbewegungen in einer Hubachse durchzuführen sind.

Der komplette Bewegungszyklus jeder NC-gesteuerten Bewegungsachse 12 bis 15 jedes Achsprozesses 16 einer Bewegungseinrichtung 19 ist demzufolge aus mehreren Teilbewegungen zusammensetzbar, wobei jede Teilbewegung einem eigenen Weggesetz zugeordnet werden kann. Dabei ist der Start- und der Endpunkt jeder NC-gesteuerten Bewegungsbahn 12 bis 15 und/ oder jede Teilbewegung im Teach-in-Verfahren festlegbar, wobei die dazwischenliegenden Kurvenstützpunkte durch On-Line-Berechnung oder durch Vorab-Berechnung sowie durch Abspeicherung in Tabellenform generierbar sind.

Zur Erzielung einer bestmöglichen Synchronität von Leitwelle des Pressensystems mit den NC-gesteuerten Bewegungsachsen 12 bis 15 der Achsprozessoren 16 jeder Bewegungseinrichtung 19 kann jede Änderung des Ist-Werts des Leitwellendrehgebers mit einer kleinstmöglichen Verzögerung an alle Achsprozessoren 16 weitergeleitet werden, wobei aufgrund der zeitlichen Entkopplung der Erfassungsschritte ΔT des Leitwellenprozessors 20 als Master und der Achsprozessoren 16 als Slave eine Korrektur zur Anpassung der Werte derart erfolgt, daß der Einfluß der Schwebung zwischen dem Zeitpunkt der Änderung des Ist-Werts des Leitwellendrehgebers und dem Lagereglertakt minimal ist.

Die Aufgaben des Achsprozessors 16 für die Slave-Funktionen sind wie folgt festgelegt:

- Ansteuerung von 3 bzw. 4 Achsen 12 bis 15, wobei folgende Funktionen realisiert sind:
- Weggesetz-Berechnung gemäß der geteachten, d. h. gelehrten Daten;
- Einlesen der Position-Ist-Werte; Schnelle digitale Lageregelung;
- Synchron-Verfahren zur Leitwelle (vorwärts und rückwärts);
- Überwachung des definierten Toleranzbandes
- Bearbeitung Fehlerstatus;

Für jede Orientierungsstation ist dabei ein eigener Slave-Rechner 16 vorhanden.

Das Steuerungskonzept für die Orientierungsstationen einer Großteil-Stufenpresse sieht dabei folgende Systemanforderungen vor:

Die zu realisierende Steuerung muß in der Lage sein, die vorgegebene Anzahl von Orientierungsstationen bzw. Leerstufen 5, 11 mit jeweils 3 (4) NC-Achsen synchron zu der Leitwelle und dem Signal des Leitwellenprozessors der Presse nach einem speziellen Bewegungsgesetz zu verfahren. Dabei darf ein vorgegebenes Positionstoleranzband nicht verlassen werden. Untersuchungen ergaben, daß die Anforderungen bezüglich Geschwindigkeit, Steifigkeit und Genauigkeit des gekoppelten Systems verbessert werden können, wenn unter anderem folgende Voraussetzungen gegeben sind:

- Hohe Rechenleistung des eingesetzten Rechners
- Hohe Dynamik der Antriebe
- Schnelles absolutes Wegmeß-System mit hoher Auflösung
- Abtastrate der Lageregler im Bereich von 1...2 Millisekunden.

Zusätzliche Forderungen technologischer Art sind:

- Ruckfreies Stoppen bzw. Fortsetzen einer Bewegung unter Einhaltung eines vorgegebenen Weggesetzes;
- Bewegung auf dem Weggesetz bei "Rückwärts-Fahren".
- Enge Kopplung zwischen Transfer und Orientierungsstationen (Tip-Betrieb der Presse/Transfer).

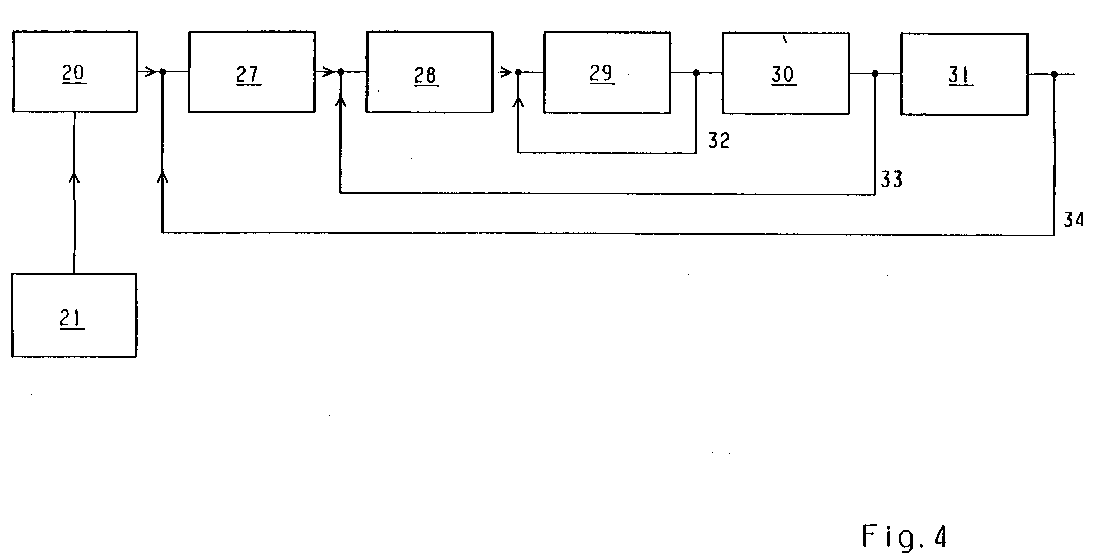

In der Fig. 3 im Diagramm 25 sowie in der Fig. 4 ist die Einhaltung eines vorgegebenen Positionstoleranzbandes schematisch dargestellt. Dabei werden zur Erreichung einer bestmöglichen Synchronität der Leitwelle mit den NC-Achsen der Achsprozessoren jede Änderung des Ist-Wertes der Leitwellendrehbewegung mit der kleinst möglichen Verzögerung an alle Achsprozessoren weitergeleitet. Durch die Differenzbildung

$$S_1 (\alpha) - S_2 (\alpha) = T_2 (\alpha)$$

bis $S_1 (\alpha) - S_n (\alpha) = T_n (\alpha)$ ergibt sich für T $(\alpha)$ ein Toleranzfenster der Bewegungsachsen, wobei $0 \leq T\alpha \leq$ Tmax ist. Nachdem der Master und die Slaves zeitlich entkoppelte Systeme darstellen, wird mittels eines Korrekturverfahrens der Einfluß der Schwebung zwischen dem Zeitpunkt der Änderung des Ist-Wertes der Leitwellenumdrehung und dem Lagereglertakt minimiert.

Bei extrem kleinen Geschwindigkeiten (Schleichgang) liegen die Änderungszeitpunkte des Ist-Wertes der Leitwellendrehbewegung zeitlich relativ weit auseinander. Um auch in diesem Betriebszustand einen ruckfreien und ruhigen Lauf der Bewegungsachsen der Orientierungsstationen zu erreichen, wird eine Geschwindigkeitsglättung im Slave-Rechner vorgenommen.

Die in Fig. 4 dargestellte funktionale Struktur des Regelkreises zeigt den Positionsgeber 21 zur Bestimmung des Ist-Werts der Leitwelle, der dem Leitwellenprozessor 20 zugeführt wird. Im Leitwellenprozessor 20 erfolgt eine Generierung des Weggesetzes, wobei der nachgeschaltete Regelkreis die übliche funktionale

Struktur enthält. Mit Bezugzeichen 27 ist ein Lagereg-ler dargestellt, dem ein Drehzahlregler 28 und diesem ein Stromregler 29 nachgeschaltet ist. Der folgende Stellmotor 30 wirkt auf die nachgeschaltete Mechanik 31. Jeder Punkt zwischen den einzelnen Gliedern wird im Regelkreis kontrolliert, was durch die Stromrückführung 32 sowie die Geschwindigkeitsrückführung 33 und die Lagerückführung 34 angedeutet ist.

Die Erfindung ist im vorbeschriebenen Ausführungsbeispiel gemäß Fig. 1 insbesondere auf den Bewegungsablauf der Bewegungseinrichtungen 19 in den beiden Orientierungsstationen 5, 11 beschrieben. Die Erfindung läßt sich auch auf jegliche andere Bewegung des Teiletransports innerhalb der Transferpresse übertragen, d.h. es können auch die Bewegungen der Quertraversen auf den Tragschienen mittels separaten Stellmotoren erfindungsgemäß vollzogen werden, wobei ebenfalls eine Zwangskopplung der Bewegung des Um-formwerkzeuges mit der entsprechenden Teilebewe-gung wie zuvor beschrieben erfolgt.

**Patentansprüche**

1. Transporteinrichtung zum Transportieren insbesondere großflächiger Teile in einer Umformmaschine und insbesondere in einer Großteil-Stufenpresse o. dgl., mit hintereinander angeordneten, auf- und abbewegbare Stößel aufweisende Bearbeitungsstationen (2), wobei das Werkstück (3) mittels einer den Takt der Umformmaschine erfaßenden Einrichtung (12 bis 16, 20, 21) mit Antrieben (30, 31) zur Steuerung von Bewegungsachsen manipulierbar ist und die Einrichtung (12 bis 16, 20, 21) eine numerische Steuereinheit (20, 16) umfaßt, die eine Zwangskopplung mit elektronischen Mit-teln zwischen dem mechanischen Bewegungsab-lauf mindestens zweier Bewegungsteilsysteme $(S_1)$ bis $(S_n)$ bewirkt, wobei das Bewegungsteilsystem $(S_1)$ die Bewegung der Umformmaschine und das Bewegungsteilsystem $(S_2)$ bis $(S_n)$ die Bewegung weiterer Werkstück-Bewegungseinrichtungen (19) innerhalb der Umformmaschine bewerkstelligt, und die Bewegung der weiteren Werkstück-Bewe-gungseinrichtungen (19) aufgrund einer elektroni-schen Nachführung ("Kopplung") in Abhängigkeit der Position einer Leitwelle (21) der Einrichtung (12 bis 16, 20, 21) erfolgt, wobei ein Prozessor (20) in Abhängigkeit des Ist-Werts des Leitwellendrehgebers eine Master-Kurve (24) $S_1=f(\alpha)$ über den Be-wegungsablauf der Umformeinrichtung erzeugt, die unmittelbar auf die Bewegungsachsen der übrigen Teilsysteme $(S_2)$ bis $(S_n)$ der Bewegungseinrichtun-gen (19) übertragen wird, wobei die Bewegung $S_2=f$ $(\alpha)$... $S_n=f(\alpha)$ der Bewegungseinrichtung (19) mit-tels separaten Achsprozessoren (16) für jede Bewegungseinrichtung (19) nach einem beliebigen mathematisch definierbaren Bewegungsgesetz (25, 26) gesteuert wird.

2. Transporteinrichtung nach Anspruch 1, dadurch ge-kennzeichnet, daß zwischen den Bearbeitungssta-tionen (2) Leerstufen bzw. Orientierungsstationen (5) zur Lageveränderung des Werkstücks (3) mit-tels Werkstück-Bewegungseinrichtungen (19) vor-gesehen sind.

3. Transporteinrichtung nach Anspruch 1, dadurch gekennzeichnet, daß die Bewegungssteuerung der Bewegungseinrichtung unter Einhaltung eines vorgegebenen Positions-Toleranzbandes erfolgt.

4. Transporteinrichtung nach einem der vorhergehenden Ansprüche, dadurch gekennzeichnet, daß mittels der numerischen Steuereinheit (20, 16) mit Master(20)-Slave(16)-Struktur eine elektrische Nachführung bzw. Kopplung der Werkstücks-Bewe-gungseinrichtungen (19) in unmittelbarer Abhän-gigkeit des jeweiligen momentanen Ist-Wertes der Leitwellendrehbewegung erfolgt, wobei die Bewegung der in der Umformmaschine vorgesehenen Bewegungseinrichtungen (19) nach vorgegebenen oder beliebigen mathematisch definierbaren Bewegungsgesetzen erfolgt und wobei eine synchrone, zwangsgekoppelte Bewegung der Leitwelle mit den NC-gesteuerten Bewegungsachsen der Bewegungseinrichtungen (19) erfolgt.

5. Transporteinrichtung nach einem der vorhergehenden Ansprüche 1 bis 4, dadurch gekennzeichnet, daß der komplette Bewegungszyklus jeder NC-gesteuerten Bewegungsachse (12 - 15) jedes Achsprozessors (16) einer Bewegungseinrichtung (19) aus mehreren Teilbewegungen zusammensetzbar ist, wobei jede Teilbewegung einem eigenen Weggesetz zuordnungsbar ist (Fig. 3a).

6. Transporteinrichtung nach Anspruch 5, dadurch gekennzeichnet, daß der Start- und der Endpunkt jeder NC-gesteuerten Bewegungsbahn (12 - 15) und/ oder jede Teilbewegung im Teach-in-Verfahren festlegbar ist und daß die dazwischenliegenden Kurvenstützpunkte durch On-Line-Berechnung oder durch Vorab-Berechnung sowie durch Abspeicherung in Tabellenform generierbar sind.

7. Transporteinrichtung nach einem der vorhergehenden Ansprüche, dadurch gekennzeichnet, daß zur Erreichung einer bestmöglichen Synchronität von Leitwelle des Pressensystems mit den NC-gesteuerten Bewegungsachsen (12 - 15) der Achsprozessoren (16) jeder Bewegungseinrichtung (19) jede Änderung des Ist-Werts des Leitwellendrehgebers mit einer kleinst möglichen Verzögerung an alle Achsprozessoren (16) weitergeleitet werden, wobei aufgrund der zeitlichen Entkopplung der Erfassungsschritte ΔT des Leitwellenprozessors (20, Master) und der Achsprozessoren (16, Slave) eine Korrektur zur Anpassung der Werte derart erfolgt, daß der Einfluß der Schwebung zwischen dem Zeitpunkt der Änderung des Ist-Werts des Leitwellendrehgebers und dem Lagereglertakt minimal ist.

## Claims

1. Transport device for transporting in particular largearea parts in a metal-forming machine and in particular in a large-part multiple-die press or similar, with processing stations (2) arranged one behind the other and having reciprocating rams, wherein the work piece (3) may be manipulated by means of a device (12 to 16, 20, 21) detecting the cycle of the metal-forming machine having drives (30, 31) to control movement axes and the device (12 to 16, 20, 21) comprises a numeric control unit (20, 16), which effects a forced coupling with electronic means between the mechanical course of movement of at least two part movement systems $(S_1)$ to $(S_n)$, wherein the part movement system $(S_1)$ performs the movement of the metal-forming machine and the part movement system $(S_2)$ to $(S_n)$ performs the movement of further work piece movement devices (19) within the metal-forming machine, and the movement of further work piece movement devices (19) is achieved on the basis of an electronic tracking ("coupling") dependent on the position of a control wave (21) of the device (12 to 16, 20, 21), wherein dependent on the actual value of the control wave synchro-generator a processor (20) generates a master curve (24) $S_1=f(\alpha)$ over the course of movement of the metal-forming machine which is transferred directly to the movement axes of the other part systems $(S_2)$ to $(S_n)$ of the movement devices (19), wherein the movement $S_2=f(\alpha)...S_n=f(\alpha)$ of the movement device (19) is controlled by means of separate axis processors (16) for each movement device (19) according to a desired mathematically definable law of movement (25, 26).

2. Transport device according to Claim 1, characterised in that empty steps or orientation stations (5) are provided between the processing stations (2) to change the position of the work piece (3) by means of work piece movement devices (19).

3. Transport device according to Claim 1, characterised in that the movement control of the movement device is achieved by adherence to a predetermined position tolerance band.

4. Transport device according to one of the preceding claims, characterised in that an electrical tracking or coupling of the work piece movement devices (19) is achieved by means of the numeric control unit (20, 16) with master (20) - slave (16) structure in direct dependence on the respective instantaneous actual value of the control wave rotational movement, wherein the movement of the movement devices (19) provided in the metal-forming machine is achieved according to predetermined or desired mathematically definable laws of movement and wherein a synchronous forcibly coupled movement of the control wave is achieved with the NC-controlled movement axes of the movement devices (19).

5. Transport device according to one of the preceding Claims 1 to 4, characterised in that the complete cycle of movement of each NC-controlled movement axis (12-15) of each axis processor (16) of a movement device (19) may be composed from several part movements, wherein each part movement may be allocated its own path law (Figure 3a).

6. Transport device according to Claim 5, characterised in that the starting and end point of each NC-controlled movement path (12-15) and/or each part movement in the teach-in process may be fixed; and that the curve support points lying inbetween may be generated by on-line calculation or by preliminary calculation and by storage in tabular form.

7. Transport device according to one of the preceding claims, characterised in that to achieve the best possible synchronism of the control wave of the pressing system with the NC-controlled movement axes (12-15) of the axis processors (16) of each movement device (19), each change in actual value of the control wave synchro-generator is passed on to all axis processors (16) with a shortest possible delay, wherein because of the time decoupling of the detection steps At of the control wave processor (20, master) and the axis processor (16, slave), a correction is achieved for adaptation of the values such that the influence of floating between the time of the change of the actual value of the control wave synchro-generator and the position regulator cycle is minimal.

## Revendications

1. Dispositif de transport pour transporter en particulier des pièces de grande surface dans une machine de formage et, en particulier, dans une presse à étages pour de grandes pièces, ou analogue, comportant des postes de traitement (2) agencés les uns derrière les autres et présentant des coulisseaux pouvant se déplacer en va-et-vient, la pièce (3) pouvant être manipulée par des entraînements (30,31) pour commander les axes de mouvement au moyen d'un dispositif (12 à 16,20,21) détectant le cycle de la machine de formage, et le dispositif (12 à 16,20,21) comportant une unité de commande numérique (20,16), qui fournit un couplage forcé à moyens électroniques entre le profil de mouvement mécanique d'au moins deux systèmes partiels de déplacement ($S_1$) à ($S_n$), le système partiel de déplacement ($S_1$) mettant en oeuvre le mouvement de la machine de formage et le système partiel de déplacement ($S_2$) à ($S_n$) mettant en oeuvre le mouvement d'autres dispositifs de déplacement de pièces (19) à l'intérieur de la machine de formage, et le mouvement des autres dispositifs de déplacement de pièces (19) ayant lieu grâce à une poursuite électronique ("couplage") de façon dépendant de la position d'un arbre de commande (21) du dispositif (12 à 16,20,21), un processeur (20) engendrant, de façon dépendant de la valeur réelle de l'encodeur de l'arbre de commande une courbe maîtresse (24) $S_1 = f(\alpha)$ sur le profil de mouvement du dispositif de formage, qui est transmise directement aux axes de déplacement des systèmes partiels restants ($S_2$) à ($S_n$) des dispositifs de déplacement (19), le mouvement $S_2 = f(\alpha)$... $S_n = f(\alpha)$ du dispositif de déplacement (19) étant commandé, au moyen de processeurs d'axes (16) séparés pour chaque dispositif de déplacement (19) selon une loi de déplacement quelconque pouvant être définie mathématiquement (25,26).

2. Dispositif de transport selon la revendication 1, caractérisé en ce que, entre les postes de traitement (2), sont prévus des étages vides ou postes d'orientation (5) pour modifier la position de la pièce (3) au moyen de dispositifs de déplacement de pièces (19).

3. Dispositif de transport selon la revendication 1, caractérisé en ce que la commande du déplacement du dispositif de déplacement est effectuée en maintenant une plage de tolérance de position prédéfinie.

4. Dispositif de transport selon une des revendications précédentes, caractérisé en ce que, au moyen de l'unité de commande numérique (20,16) à structure maître (20)-esclave (16), il est effectué une poursuite ou couplage électrique des dispositifs de déplacement de pièces (19) de façon dépendant directement de la valeur réelle momentanée respective de la rotation de l'arbre de commande, le déplacement des dispositifs de déplacement prévus dans la machine de formage (19) ayant lieu selon des lois de déplacement prédéfinies ou quelconques pouvant être définies mathématiquement et un déplacement couplé de façon forcée, synchrone, de l'arbre de commande ayant lieu avec les axes de déplacement commandés numériquement des dispositifs de déplacement (19).

5. Dispositif de transport selon une des revendications précédentes 1 à 4, caractérisé en ce que le cycle de déplacement complet de chaque axe de déplacement commandé numériquement (12-15) de chaque processeur d'axe (16) d'un dispositif de déplacement (19) peut être constitué de plusieurs déplacement partiels, chaque déplacement partiel pouvant être associé à une loi de course propre (figure 3a).

6. Dispositif de transport selon la revendication 5, caractérisé en ce que le point de début et le point de fin de chaque voie de déplacement commandée numériquement (12-15) et/ou chaque déplacement partiel peuvent être déterminés en méthode colloque, et en ce que les points intermédiaires de la courbe peuvent être engendrés par calcul en ligne ou par calcul préalable ainsi que par mémorisation sous forme de tableau.

7. Dispositif de transport selon une des revendications précédentes, caractérisé en ce que, pour atteindre le meilleur synchronisme possible de l'arbre de commande du système de presse avec les axes de déplacement commandés numériquement (12-15) des processeurs d'axes (16) de chaque dispositif de déplacement (19), chaque modification de la valeur réelle de l'encodeur de l'arbre de commande peut être transmise à tous les processeurs d'axes (16) avec le plus petit retard possible, une correction pour l'adaptation des valeurs ayant lieu, en raison du découplage temporel des étapes de détection ($\Delta T$) du processeur de l'arbre de commande (20, maître) et des processeurs d'axes (16, esclave), de sorte que l'influence du battement entre le moment de la modification de la valeur réelle de l'encodeur de l'arbre de commande et le cycle de régulation de position soit minimale.

Fig.1

Fig.1b

Fig.1a

Fig.2a

EP 0 573 903 B1

20    16    16    16

E/A
21
13
15
12

D/A — 17
E/A — 18

Fig. 2b

Fig. 3

Fig. 3a

Fig. 4